# EUROPÄISCHE PATENTANMELDUNG

(11) **EP 2 263 980 A1**
(43) Veröffentlichungstag der Anmeldung: **22.12.2010**
(21) Anmeldenummer: 10006218.1
(22) Anmeldetag: 16.06.2010
(51) Int. Cl.: C03C 17/00, B65G 49/06, C03C 17/28, C03C 21/00

(54) **Korrosionsschutzmittel für Glas**

(30) Priorität: 16.06.2009 DE 102009025411
(71) Anmelder: Innovent e.V. Technologieentwicklung, 07745 Jena (DE)
(72) Erfinder: Grünler, Bernd, Dr., 07937 Zeulenroda (DE); Schimanksi, Arnd, Dr., 44329 Dortmund (DE); Pfuch, Andreas, Dr., 99510 Apolda (DE); Heft, Andreas, Dr., 07545 Gera (DE); Geyer, Stefan, Dr., 01277 Dresden (DE); Rüffer, Paul, 07745 Jena (DE)
(74) Vertreter: Donath, Dirk

(57) **Zusammenfassung**

Die Erfindung betrifft ein Korrosionsschutzmittel für Glas, insbesondere Kalk- Natron- Floatglas.

Die Aufgabe der Erfindung, die Nachteile des Standes der Technik zu vermeiden, in dem ein Korrosionsschutzmittel für Glas, insbesondere Kalk- Natron- Floatglas, bereitgestellt wird, das bei seiner Verwendung besonders effektiv durch einen aktiven Schutzmechanismus möglichst lange vor aerober Korrosion schützt, wird dadurch gelöst, dass das Korrosionsschutzmittel Zinkstaubpartikel oder Partikelstaub, der eine Zinkverbindung enthält, ist.

## Beschreibung

Die Erfindung betrifft ein Korrosionsschutzmittel für Glas, insbesondere Kalk- Natron- Floatglas.

Seit einigen Jahren ist bekannt, dass man Glaskorrosion in Geschirrspülmaschinen besonders wirksam durch Zinkverbindungen unterdrücken kann (siehe dazu z.B. DE 603 13 892 T2). Diese Erkenntnis aus der maschinellen Geschirrspülmittelentwicklung wurde von Kalk-Natron-Floatglasherstellern teilweise übernommen. Auch diese besprühen ihr frisch erzeugtes Glas zum Teil mit wässrigen Lösungen von Zinksalzen, um Glaskorrosion zu verhindern. Der Wirkmechanismus ist dabei so, dass das zweiwertige Zinkkation zwei einwertige Natriumkationen an der Glasoberfläche substituiert und damit den weiteren Angriff auf das Glas stark hemmt.
Das Besprühen mit zinkhaltigen Lösungen und deren nachträgliche Trocknung sind aber sehr aufwändig, teuer und können auch unerwünschte Flecken hinterlassen.

DE 198 60 670 A1 offenbart die Verwendung eines wasserlöslichen Glases, mit einem Gehalt an wenigstens einer Verbindung, die mindestens ein Agens freisetzen kann, das in der Lage ist, Korrosionsschutz für Glaswaren bei Reinigungs- und/oder Spülvorgängen einer Geschirrspülmaschine bereitzustellen, von höchstens 85 Mol-%, zur Freisetzung des (der) für den Korrosionsschutz der Glaswaren wirksamen Agens (Agentien) aus dem waserlöslichen Glas in den Reinigungs- und/oder Spülvorgängen der Geschirrspülmaschine, wobei die Löslichkeit des wasserlöslichen Glases durch einen Masseverlust von wenigstes 0,5 mg unter den in DIN ISO 719 angegebenen Bedingungen definiert ist, Zusammensetzungen zur erfindungsgemäßen Verwendung sowie Verfahren zur Hemmung der Korrosion unter Verwendung der erfindungsemäßen Zusammensetzungen.

Aus DE 43 38 626 A1 ist ein Additiv für wässrige alkalische Reinigungslösungen für Flaschenreinigungsanlagen, enthaltend eine

Kombination von Hydroxyoligo-carbonsäuren und Phosphorsäuren, das die Glaskorrosion während der Reinigung verringert bekannt.

DE 101 04 469 A1 offenbart die Verwendung von Copolymeren in Reinigerformulierungen zur Verhinderung der Glaskorrosion während des Reinigungsvorganges in Geschirrspülmaschinen.

Aus DE 10 2007 039 654 A1 ist ein Reinigungsmittel für Glasoberflächen bekannt,
bei dem mehrarmige Silyl-Polyalkoxylate zur Verminderung der Glaskorrosion beim maschinellen Reinigen einer Glasoberfläche eingesetzt werden.

DE 25 39 531 A1 offenbart ein Mittel zum maschinellen Spülen von Geschirr auf Basis von Alkalisilikaten und/oder -carbonaten und/oder - hydroxiden.

Aus DE 36 07 404 A1 ist bekannt, dass bei dünnem Flachglas chemische Festigungsverfahren in Form von Niedrigtemperatur-Ionenaustausch bzw. Hochtemperatur-Ionenaustausch zur Anwendung kommen.
Beim Niedrigtemperatur-Ionenaustausch wird das Glas mit einer Quelle von Alkalimetallionen mit relativ großem Ionenradius, wie Kaliumionen, bei einer Temperatur in Berührung gebracht, die unter der Transformationstemperatur des Glases liegt, um einen Austausch der großen Alkalimetallionen gegen relativ kleine Alkalimetallionen, wie Natriumionen, in der Glasoberfläche zu erreichen. Gemäß DE 36 07 404 A1 werden bei dem Verfestigungsverfahren 350 bis 650°C angewendet, um den Ionenaustausch zu generieren.

Die Aufgabe der vorliegenden Erfindung ist es, die Nachteile des Standes der Technik zu vermeiden, in dem ein Korrosionsschutzmittel für Glas, insbesondere Kalk- Natron- Floatglas bereitgestellt wird, das bei seiner Verwendung besonders effektiv durch einen aktiven Schutzmechanismus möglichst lange vor aerober Korrosion schützt. Gelöst werden diese Aufgaben durch ein Korrosionsschutzmittel gemäß dem ersten Patentanspruch. Vorteilhafte Ausgestaltungen der Erfindung sind in den nachgeordneten Ansprüchen angegeben.

Das Wesen der Erfindung besteht in der Bereitstellung eines neuartigen Mittels zur Korrosionsverhinderung bei Kalk- Natron- Floatglas in Form eines Trennmittels (mechanischen Abstandhalters) zur Glasstapelung, welches zumindest an seiner Oberfläche Zinkstaub oder eine Zinkverbindung aufweist bzw. das Trennmittel / der Abstandhalter größtenteils oder völlig aus Zink oder einer Zinkverbindung besteht. Durch diese erfinderische Lösung werden Natriumionen an der Glasoberfläche übereinander gestapelter Kalk- Natron- Floatgläser durch Zinkionen ersetzt, wodurch eine Glaskorrosion unterbunden wird.

Erfindungsgemäß wird das Zink bzw. die Zinkverbindung dem Trennmittel zum Stapeln der Flachglasscheiben (Lucite COLACRYL P2608) zugesetzt.

Die Erfindung wird nachstehend an Hand der folgenden Ausführungsbeispiele näher erläutert.

### Ausführungsbeispiel 1

10 kg Polymethylmethacrylatpolymerkügelchen mit 110µm Durchmesser (Lucite COLACRYL P2608) werden in einem rotierendem Gefäß mit 0,5 kg Zinkoxid (Zinkweiß, HARZSIEGEL, Standard, mittlere Teilchengröße 0,21 µm) intensiv vermischt. Dieses Produkt wird wie üblich in einer Menge von ca. 120 mg pro Quadratmeter auf das frisch hergestellte Flachglas vor der Stapelung aufgebracht. Auf diese mit den Polymerkügelchen und den Zinkoxidpartikeln beschichtete Glasseite wird anschließend ein Luftstrom aus einer Düsenanordnung geblasen, der zuvor durch eine mit einer Mischung aus 50% Essigsäure und 50% Wasser gefüllte Gaswaschflasche geleitet wurde. Die mit Essigsäure und Wasser angereicherte Luft wandelt die Zinkoxidpartikel in Zinkacetat um, welches im Wasserfilm über das Glas spreitet, sodass der Austausch der Natriumionen durch Zinkionen an der Glasoberfläche erfolgen kann, und dadurch Glaskorrosion wirksam verhindert wird.

### Ausführungsbeispiel 2

Vorgehensweise wie bei Ausführungsbeispiel 1, nur werden statt 0,5 kg Zinkoxid 0,5 kg Zinkformiat verwendet und auf das Anblasen mit dem Essigsäure-Wasser-Luftgemisch wird verzichtet.

### Ausführungsbeispiel 3

Vorgehensweise wie bei Ausführungsbeispiel 1, nur werden statt 0,5 kg Zinkoxid 0,5 kg Zinkpropionat verwendet und auf das Anblasen mit dem Essigsäure-Wasser-Luftgemisch wird verzichtet.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

## Patentansprüche

1. Verwendung von Zinkstaubpartikeln oder Partikelstaub, der Zink oder eine Zinkverbindung enthält, als Korrosionsschutzmittel für Kalk-Natron-Floatglas.

2. Verwendung gemäß Anspruch 1, **dadurch gekennzeichnet, dass** die Zinkverbindung Zinkoxid ist.

3. Verwendung gemäß Anspruch 1, **dadurch gekennzeichnet, dass** die Zinkverbindung Zinkformiat ist.

4. Verwendung gemäß Anspruch 1, **dadurch gekennzeichnet, dass** die Zinkverbindung Zinkpropionat ist.
